# EUROPEAN PATENT APPLICATION

(11) **EP 4 546 750 A1**
(43) Date of publication of application: **30.04.2025**
(21) Application number: 23845109.0
(22) Date of filing: 07.06.2023
(51) Int. Cl.: H04L 47/2491

(54) **DATA TRANSMISSION METHOD, SLICE RELATIONSHIP MAPPING METHOD, ELECTRONIC DEVICE, AND MEDIUM**

(30) Priority: 25.07.2022 CN 202210877253
(71) Applicant: ZTE Corporation, Shenzhen, Guangdong 518057 (CN)
(72) Inventor: GAO, Xiling, Shenzhen, Guangdong 518057 (CN)
(74) Representative: Perronace, Andrea
(86) International application number: PCT/CN2023/098991
(87) International publication number: WO 2024/021896

(57) **Abstract**

The present invention provides a data transmission method, a slice relationship mapping method, an electronic device and a computer-readable storage medium. The data transmission method includes: determining a corresponding target slice in a preset mapping relationship according to Differentiated Services Code Point (DSCP) information in a data packet, wherein the preset mapping relationship is a mapping relationship between DSCPs and slices established based on Quality of Service (QoS) parameters; adding service routing to the target slice according to a service address in the data packet; and forwarding the data packet in a network of the target slice according to the service routing.

## Description

### Cross-Reference to Related Application

The present invention is based on Chinese patent application no. CN 202210877253.1 filed on July 25, 2022 and entitled "Data Transmission Method, Slice Relationship Mapping Method, Electronic Device and Medium", and claims priority to the Chinese patent application, the invention of which is incorporated herein by reference in its entirety.

### Technical Field

The present invention relates to the field of communications, and in particular, to a data transmission method, a slice relationship mapping method, an electronic device and a computer-readable storage medium.

### Background

With the advancement of the 5th Generation Mobile Communication Technology (5G), the slicing function defined in the corresponding 3rd Generation Partnership Project (3GPP) has garnered attention from various industries. Implementing the slicing function in various devices, including communication end devices such as a mobile phone and a module, and data transfer devices such as a gateway and a router, becomes a problem to be solved.

### Summary

An embodiment of the present invention provide a data transmission method, a slice relationship mapping method, an electronic device and a computer-readable storage medium.

In a first aspect, the present invention provides a data transmission method. The method may include:
determining a corresponding target slice in a preset mapping relationship according to Differentiated Services Code Point (DSCP) information in a data packet, wherein the preset mapping relationship is a mapping relationship between DSCPs and slices established based on Quality of Service (QoS) parameters; adding service routing to the target slice according to a service address in the data packet; and forwarding the data packet in a network of the target slice according to the service routing.

In a second aspect, the present invention provides a slice relationship mapping method. The method may include: establishing a first mapping relationship between slices and Quality of Service (QoS) parameters; establishing a second mapping relationship between DSCPs and the QoS parameters; and generating a mapping relationship between the DSCPs and the slices according to the first mapping relationship and the second mapping relationship.

In a third aspect, the present invention provides a data transmission apparatus. The apparatus may include: a slice and DSCP correspondence module, configured to determine a corresponding target slice in a preset mapping relationship according to DSCP information in a data packet, wherein the preset mapping relationship is a mapping relationship between DSCPs and slices established based on QoS parameters; and a route generation module, configured to add service routing to the target slice according to a service address in the data packet, so that the apparatus forwards the data packet in a network of the target slice according to the service routing.

In a fourth aspect, the present invention provides a slice relationship mapping apparatus. The apparatus may include: a first mapping module, configured to establish a first mapping relationship between slices and QoS parameters; a second mapping module, configured to establish a second mapping relationship between DSCPs and the QoS parameters; and a third mapping module, configured to generate a mapping relationship between the DSCPs and the slices according to the first mapping relationship and the second mapping relationship.

In a fifth aspect, the present invention provides an electronic device. The electronic device may include: one or more processors; a memory, storing one or more programs which, when executed by the one or more processors, cause the one or more processors to implement the data transmission method according to any one embodiment in the first aspect and/or implement the slice relationship mapping method according to any one embodiment in the second aspect; and one or more I/O interfaces connected between the processor and the memory, and configured to implement information exchange between the processor and the memory.

In a sixth aspect, the present invention provides a computer-readable storage medium, wherein the readable storage medium stores a computer program which, when executed by a processor, implements the data transmission method according to any one embodiment in the first aspect and/or implement the slice relationship mapping method according to any one embodiment in the second aspect.

### Brief Description of the Drawings

Fig. 1 is a flowchart of a data transmission method provided according to embodiments of the present invention.
Fig. 2 is a flowchart of some steps of a slice relationship mapping method provided according to embodiments of the present invention.
Fig. 3 is a schematic diagram of a data transmission apparatus provided according to embodiments of the present invention.
Fig. 4 is a schematic diagram of a slice relationship mapping apparatus provided according to embodiments of the present invention.
Fig. 5 is a basic block diagram of a network structure applied to embodiments of the present invention.
Fig. 6 is a schematic diagram of an internal structure of a communication terminal provided according to embodiments of the present invention.
Fig. 7 is a schematic diagram of an internal structure of a gateway device provided according to embodiments of the present invention.
Fig. 8 is a schematic flowchart of a terminal side provided according to embodiments of the present invention.
Fig. 9 is a schematic flowchart of a gateway device provided according to embodiments of the present invention.
Fig. 10 is a schematic diagram of an electronic device provided according to embodiments of the present invention.
Fig. 11 is a schematic diagram of a computer-readable storage medium provided according to embodiments of the present invention.

### Detailed Description of the Embodiments

It should be understood that the specific embodiments described herein are only used to explain the present invention, and are not intended to limit the present invention.

In the following description, the use of a suffix such as "module", "component", or "unit" to denote elements is merely for convenience of description of the present invention, and has no special meaning per se. Thus, "module", "component", or "unit" may be used in a mixed manner.

For the network slicing functions, 3GPP defines the slicing functions based on a Data Network Name (DNN), Internet Protocol (IP), and Application (app). Fundamentally, these functions can cover scenarios in which data endpoint devices use slicing, especially app-based slicing scenarios, which may become future mainstream scenarios.

The 5G network supports slicing functions, one of which is an app-based slice selection function. However, in a wireless routing environment, app-related information can only reach a wireless router side, not a final terminal side, and therefore an app-based slice selection function cannot be implemented in this scenario. For a gateway device, the app-related information cannot be identified. In theory, slicing can be implemented based on an IP address, but it is difficult to apply in an actual usage process due to the variability of the IP address. In a Wi-Fi scenario, because all apps on multiple terminals share a same IP address, it is difficult to distinguish apps on gateway devices according to the IP address. Based on the foregoing reasoning, there is a need for a implementing app network slicing method by a gateway device.

The inventor proposes an app-based slice data transmission method on a gateway device for addressing the problem that a slice selection function can only be achieved in a wireless router, not in a terminal side, and a gateway device cannot identify terminal app-related information. By using QoS parameters as intermediaries, a correlation between data packets and slices is determined based on a correlation between QoS parameters of the data packets and QoS parameters of network slices, so that a wireless routing gateway can support app-based slicing functions.

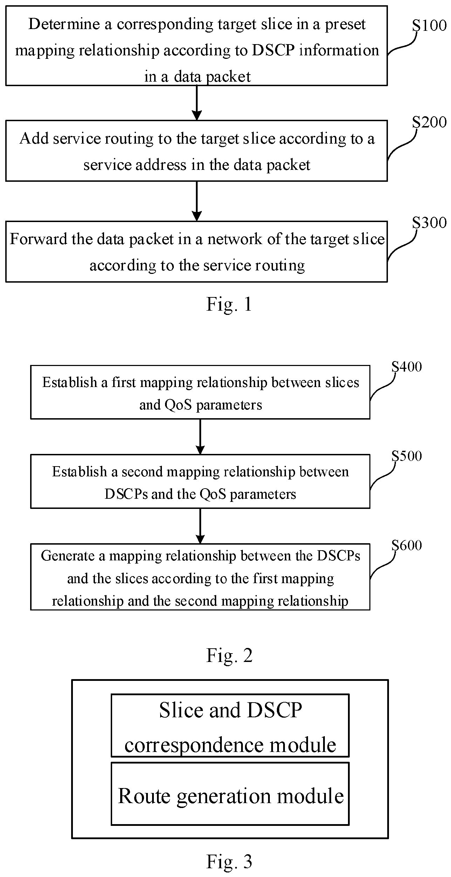

In a first aspect of the present invention, embodiments of the present invention provide a data transmission method. As shown in Fig. 1, the method includes the following steps:
At S100, a corresponding target slice in a preset mapping relationship is determined according to DSCP information in a data packet, wherein the preset mapping relationship is a mapping relationship between DSCPs and slices established based on Quality of Service (QoS) parameters;
At S200, service routing is added to the target slice according to a service address in the data packet; and
At S300, the data packet is forwarded in a network of the target slice according to the service routing.

The embodiments of the present invention are applied to gateway devices, and based on the support of slices by a network side app ID, application attributes corresponding to the network side app slices are mapped to a set of QoS parameters, while the DSCP information based on the terminal data packet itself is mapped to the other set of QoS parameters, and then the QoS parameters are used as intermediaries to obtain a correlation between the network slices and the DSCP information about the terminal data packet, finally automatically achieving the support and selection of the network slices by gateway devices based on apps.

It should be noted that, in the present invention, the QoS parameters are used as intermediaries, according to a mapping relationship between the QoS parameters and network slice attributes, and a mapping relationship between the QoS parameters and the DSCP information carried by the terminal data packet, a correlation between the network slice attributes and the DSCP information about the data packet is then obtained, which is only an exemplary embodiment of the present invention; similarly, other parameters related to both network slices and terminal data packets can serve as intermediaries, pairwise associations are established, ultimately deriving the association relationship between the network slices and the data packets.

In an embodiment, the added service routing is conditional routing, and the step that the data packet is forwarded in a network of the target slice according to the service routing includes:
a target IP address of the data packet, and at least one of the following conditions are matched according to the service routing:
a source IP address, a source port number, a destination port number, an application category, and a DSCP label.

In an embodiment, the step that the data packet is forwarded in a network of the target slice according to the service routing includes:
in a case that a data packet to be forwarded satisfies the matching conditions of the service routing, the data packet to be forwarded is forwarded to a network of the target slice according to the service routing;
otherwise, the data packet to be forwarded is forwarded according to the matched non-conditional routing.

Since an IP address of a terminal app changes frequently in use, and when the terminal is accessed via Wi-Fi, a situation in which the apps of a plurality of terminals use the same external IP address may also occur, in order to better distinguish different apps of different terminals, routing matching conditions are added when service routing is added to a slice, and the service routing is set as conditional routing and matching conditions for information such as a source IP address, a source port number, a target port number, an application category and a DSCP label are added, achieving accurate matching of the service data packets of the apps, and preventing irrelevant packets from also being forwarded to slices. In an embodiment, the data packet is a data packet of a terminal app, and before determining a corresponding target slice in a preset mapping relationship according to the DSCP information in the data packet, the method further includes:
the DSCP information is added to the data packet according to the DSCP information in the data packet of the app.

In an embodiment, the embodiments of the present invention are implemented on a gateway device having a Wi-Fi access capability, i.e., a home gateway or a routing device oriented to a terminal user. The gateway device has both a Wi-Fi access capability and a data packet QoS capability.

It should be noted that even a terminal that does not support a QoS capability, a data packet sent thereby also carries default QoS parameters, and the data transmission method proposed in the present invention can also be used. However, in a case that all data packets sent by the terminal only carry default QoS parameters, when there is a need to determine a corresponding slice, the slice can only be distinguished according to conventional parameters such as a destination IP address and an app ID, so that the discrimination will be affected. In a case that the method is implemented on a gateway device that has both a Wi-Fi access capability and a data packet QoS capability, QoS parameters corresponding to the DSCP label carried in data packet may be determined according to the data packet, so that a correlation between data packets and slices can be refined according to different QoS parameters, so as to forward the data packets to more appropriate slices.

As a second aspect of the present invention, embodiments of the present invention provide a slice relationship mapping method. As shown in Fig. 2, the method includes the following steps:
At S400, a first mapping relationship between slices and QoS parameters is established;
At S500, a second mapping relationship between DSCPs and the QoS parameters is established; and
At S600, a mapping relationship between the DSCPs and the slices is generated according to the first mapping relationship and the second mapping relationship.

In the related art, there is a problem that the slice selection function can only be implemented in a wireless router, but not in a terminal side, and a gateway device cannot identify the terminal app-related information. To this problem, the embodiments of the present invention provide a slice relationship mapping method on a gateway device. QoS parameters are used as intermediaries, according to a mapping relationship between the QoS parameters and network slice attributes, and a mapping relationship between the QoS parameters and the DSCP information carried by the terminal data packet, a correlation between the network slice attributes and the DSCP information about the data packet is then obtained. Therefore, a mapping relationship is established between DSCPs and slices that do not have a direct association relationship originally, and then this mapping relationship is used as a preset mapping relationship in the data transmission method according to the first aspect of the present invention, so that the data transmission method can establish and add service routing to a corresponding slice.

In an embodiment, the step that a first mapping relationship is established between the slices and the QoS parameters includes:
a first mapping relationship is established according to slices locally collected and QoS parameters.

In an embodiment, the step that a first mapping relationship is established between the slices and the QoS parameters includes:
the established first mapping relationship is acquired from a controller.

It should be noted that the mapping table of slices and QoS parameters may vary across operators; therefore, the mapping table of slices and QoS parameters may be maintained based on the dimensions of each operator. For the current gateway device, a first mapping relationship may be established only between locally collected slices and QoS parameters, and may also be established between slices acquired from a management device such as a network management server and a controller and QoS parameters.

In an embodiment, the step that the mapping relationship between the DSCPs and the slices is established includes:
a first mapping table of slices and QoS parameters is established;
a second mapping table of the DSCPs and the QoS parameters is established; and
a third mapping table representing a mapping relationship between the DSCPs and the slices is generated according to the first mapping table and the second mapping table.

After the third mapping table representing the mapping relationship between the DSCPs and the slices is generated, this mapping relationship is effectively solidified, and there is no need to regenerate it each time a service is processed, and updates are required on the existing relationship only when changes occur. In addition, the generated mapping table may also be reported to a management device such as a network management server and a controller, and consistency of service routing slices in the local area is implemented by sharing the third mapping table.

The following describes specific applications of the data transmission method in the first aspect and the slice relationship mapping method in the second aspect of the present invention in actual service processes with reference to three embodiments.

### Embodiment 1

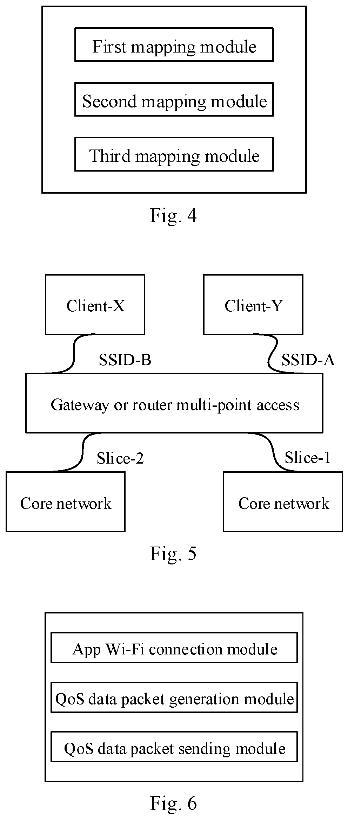

Fig. 5 shows a basic block diagram of a network structure applied in embodiments of the present invention.

Client-X and Client-Y serving as terminals are respectively connected to the core networks of different slices via multipoint access to a gateway and router using service set identifiers SSID-A and SSID-B, respectively.

The internal structure of the communication terminal in this embodiment is as shown in Fig. 6, and includes: an app Wi-Fi connection module, configured to connect Wi-Fi to communicate with an app; a QoS data packet generation module, configured to add a DSCP label according to the app class; and a QoS data packet sending module, configured to send the data packet added with the DSCP label to a gateway or a router.

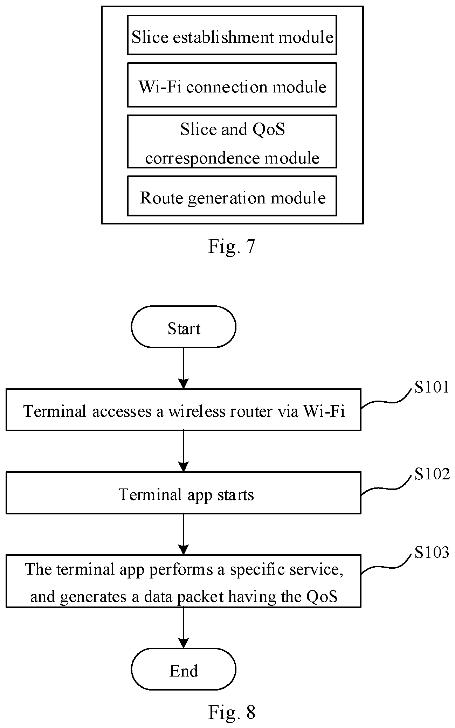

The internal structure of the gateway device in this embodiment is as shown in Fig. 7, and includes: a slice establishment module, configured to manage slices; a slice and QoS correspondence module, configured to determine QoS parameters corresponding to the slices; a Wi-Fi module, configured to manage Wi-Fi access; and a route generation module, configured to determine QoS parameters corresponding to a terminal data packet according to DSCP information in the terminal data packet, so as to determine a correlation between terminal data packets and slices, and add service routing related to the terminal data packet to a corresponding slice. Upon receipt of a data packet, service routing is inquired to transmit the data packet to a corresponding slice.

### Embodiment 2

Embodiment 2 implements a implementing app network slicing method on a terminal data packet. The flow at a terminal side is as shown in Fig. 8, and specifically:
At S101: a terminal accesses a wireless router via Wi-Fi.

The terminal is connected to a wireless router via Wi-Fi.

At S102: the terminal app starts.

The terminal starts a certain app, where the app has specific QoS.

At S103: the terminal app performs a specific service, and generates a data packet having QoS.

The terminal generates a data packet having specific QoS.

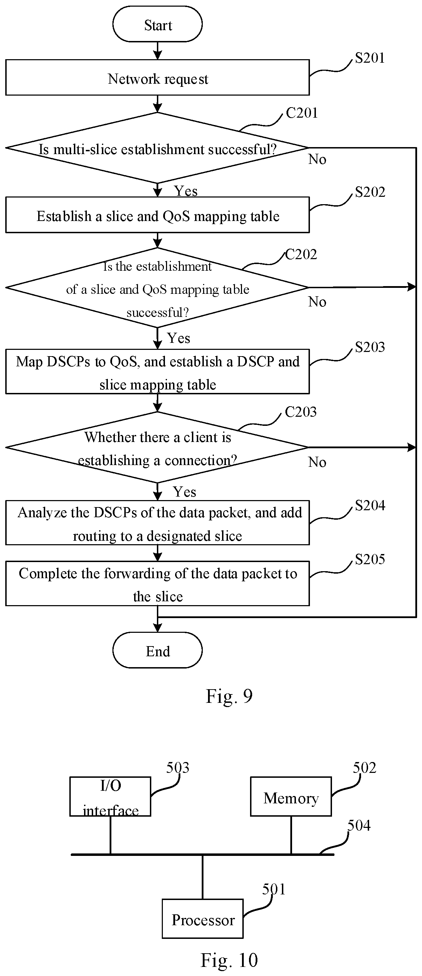

The flow of the gateway method is as shown in Fig. 9, specifically:
At S201: multi-slice is established.

The gateway device establishes various slicing functions based on the support of network slices and the interaction with 3GPP core networks. Each slice function corresponds to a different QoS.

Determination step C201: is multi-slice establishment is successful?

It is determined whether all multi-slice services have been successfully established.

Scenarios that may affect the multi-slice services include the device's subscription status and the current network's support capabilities.

At S202: a slice and QoS mapping table is established.

Based on the app characteristics corresponding to the app slices, an app slice and QoS mapping table is established.

As the mapping table may vary across different operators, the mapping table needs to be maintained according to the operators.

The table may be integrated locally, or acquired and updated by means of a server.

Determination step C202: is the establishment of a slice and QoS mapping table successful?

It is determined whether the app slice and QoS mapping table has been successfully established.

At S203: the DSCPs are mapped to the QoS, and a DCSP and slice mapping table is established.

Based on the slice <-> QoS mapping table, and the QoS <-> DSCP mapping table, a slice <-> DSCP mapping table is established. The table is used for forwarding a data packet in future.

Determination step C204: whether there is a client establishing a connection?

Wait for the client to establish a connection and trigger the service.

At S205: the DSCPs of the data packet are analyzed, and routing is added to the designated slice.

It is determined whether the received data packet contains a DSCP label.

For the data packet has a DSCP label, based on the "slice <-> DSCP" mapping table established above, routing is established from the packet to the corresponding slice.

At S206: the forwarding of the data packet to the slice is complete.

Based on the established routing table, the data packet is forwarded to the designated slice.

### Embodiment 3

It is assumed that there are only three apps on the communication terminal, and only two slices corresponding to specific apps are issued on the wireless network.

It is assumed that there are three apps on the communication terminal, which are respectively a game app "Glory of Kings", a voice app "Teams", and a voice app "Tecent meeting".

The network side issues two slices, which are respectively slice 1 corresponding to "Glory of Kings", and slice 2 corresponding to "Tecent Meeting".

The wireless gateway device performs QoS analysis on the app slices, and establishes a slice and QoS mapping table:
"Glory of Kings" is a game application and belongs to an interactive service, and corresponds to QoS "Video Control";

"Tecent Meeting" is a voice application and belongs to a voice service, and corresponds to QoS "Interactive Video";

The terminal accesses a router, and runs "Glory of Kings"
the terminal sends data, and a DSCP label "Video Control" is added to the sent data; and
the wireless router forwards the data, and routing is added to "slice 1" based on the DSCP label "Video Control".

The terminal accesses a router, and runs "Tecent Meeting"
the terminal sends data, and a DSCP label "Interactive Video" is added to the sent data; and
the wireless router forwards the data, and routing is added to "slice 2" based on the DSCP label "Video Control".

The terminal accesses a router, and runs "Teams"
the terminal sends data, and a DSCP label "Interactive Video" is added to the sent data; and
the wireless router forwards the data, and routing is added to "slice 2" based on the DSCP label "Video Control".

According to the foregoing embodiments, different app slices may be selected based on different QoS.

In a third aspect, as shown in Fig. 3, an embodiment of the present invention provide a data transmission apparatus, including:
a slice and DSCP correspondence module, configured to determine a corresponding target slice in a preset mapping relationship according to DSCP information in a data packet, wherein the preset mapping relationship is a mapping relationship between DSCPs and slices established on the basis of QoS parameters; and
a route generation module, configured to add service routing to the target slice according to a service address in the data packet, so that the apparatus forwards the data packet in a network of the target slice according to the service routing.

In a fourth aspect, as shown in Fig. 4, an embodiment of the present invention provide a slice relationship mapping apparatus, including:
a first mapping module, configured to establish a first mapping relationship between slices and QoS parameters;
a second mapping module, configured to establish a second mapping relationship between DSCPs and the QoS parameters; and
a third mapping module, configured to generate a mapping relationship between the DSCPs and the slices according to the first mapping relationship and the second mapping relationship.

In a fifth aspect, as shown in Fig. 10, an embodiment of the present invention provide an electronic device, including:
one or more processors 501;
a memory 502, storing one or more programs which, when executed by one or more processors, cause the one or more processors to implement the data transmission method in any one embodiment of the first aspect and/or implement the slice relationship mapping method in any one embodiment of the second aspect; and
one or more I/O interfaces 503 connected between the processor and the memory and configured to implement information exchange between the processor and the memory.

The processor 501 is a device having a data processing capability, and includses, but is not limited to, a central processing unit (CPU), etc. The memory 502 is a device having a data storage capability, and includes, but is not limited to, a Random Access Memory (RAM, more specifically, SDRAM, DDR, etc.), a Read-Only Memory (ROM), an Electrically Erasable Programmable Read-Only Memory (EEPROM), and a flash memory (FLASH). The I/O interface (read/write interface) 503 is connected between the processor 501 and the memory 502, and can implement information exchange between the processor 501 and the memory 502, and includes, but is not limited to, a data bus, etc.

In an embodiment, the processor 501, memory 502, and I/O interface 503 are interconnected via a bus 504, which in turn are connected to other components of a computing device.

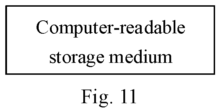

In a sixth aspect, an embodiment of the present invention provide a computer-readable storage medium. As shown in Fig. 11, the computer-readable storage medium stores a computer program which, when executed by a processor, implements the data transmission method in any one embodiment of the first aspect and/or implements the slice relationship mapping method in any one embodiment of the second aspect.

Those of ordinary skill in the art can appreciate that all or some of the steps of the methods disclosed above, systems, and functional modules/units in a device can be implemented as software, firmware, hardware, and any suitable combination thereof.

In hardware embodiments, the division of functional modules/units referred to in the above description does not necessarily correspond to the division of physical components; for example, one physical component may have multiple functions, or one function or step may be cooperatively performed by several physical components. Some or all of physical components may be implemented as software executed by a processor, such as a central processing unit, digital signal processor, or microprocessor, or as hardware, or as an integrated circuit, such as an application specific integrated circuit. Such software may be distributed on a computer-readable medium, which may include a computer storage medium (or non-transitory medium) and communication medium (or transitory medium). As is well known to those of ordinary skill in the art, the term computer storage medium includes volatile and nonvolatile, removable and non-removable media implemented in any method or technology for storage of information such as computer-readable instructions, data structures, program modules, or other data. The computer storage medium includes, but is not limited to, RAM, ROM, EEPROM, flash memory or other memory technology, CD-ROM, digital versatile disk (DVD) or other optical disk storage, magnetic cassettes, magnetic tapes, magnetic disk storage or other magnetic storage apparatuses, or any other medium which can be used to store desired information and can be accessed by a computer. In addition, it is well known to those of ordinary skill in the art that the communication medium typically includes computer-readable instructions, data structures, program modules, or other data in modulated data signals such as a carrier or other transport mechanisms and may include any information delivery medium.

The an embodiment of the present invention have been described above with reference to the accompanying drawings, and thus are not intended to limit the claimed scope of the present invention. Any modifications, equivalent replacements, and improvements made by a person skilled in the art without departing from the scope and spirit of the present invention shall all belong to the claimed scope of the present invention.

## Claims

1. A data transmission method, comprising:
determining, according to Differentiated Services Code Point ,DSCP, information in a data packet, a corresponding target slice in a preset mapping relationship, wherein the preset mapping relationship is a mapping relationship between DSCPs and slices established based on Quality of Service ,QoS, parameters;
adding, according to a service address in the data packet, service routing to the target slice; and
forwarding, according to the service routing, the data packet in a network of the target slice.

2. The data transmission method according to claim 1, wherein the added service routing is conditional routing, and the forwarding, according to the service routing, the data packet in a network of the target slice comprises:
matching, according to the service routing, a target IP address of the data packet and at least one of the following conditions:
a source IP address, a source port number, a target port number, an application category, and a DSCP label.

3. The data transmission method according to claim 2, wherein the forwarding, according to the service routing, the data packet in a network of the target slice comprises:
in a case that a data packet to be forwarded satisfies matching conditions of the service routing, forwarding, according to the service routing, the data packet to be forwarded to the network of the target slice;
otherwise, forwarding, according to matched non-conditional routing, the data packet to be forwarded.

4. A slice relationship mapping method, comprising:
establishing, between slices and Quality of Service ,QoS, parameters, a first mapping relationship;
establishing, between differentiated service code points ,DSCPs, and the QoS parameters, a second mapping relationship; and
generating, according to the first mapping relationship and the second mapping relationship, a mapping relationship between the DSCPs and the slices.

5. The slice relationship mapping method according to claim 4, wherein the establishing, between slices and QoS parameters, a first mapping relationship comprises:
establishing, according to locally collected slices and QoS parameters, the first mapping relationship.

6. The slice relationship mapping method according to claim 4, wherein the establishing, between slices and QoS parameters, a first mapping relationship comprises:
acquiring, from a controller, the established first mapping relationship.

7. A data transmission apparatus, comprising:
a slice and DSCP correspondence module, configured to determine a corresponding target slice in a preset mapping relationship according to DSCP information in a data packet, wherein the preset mapping relationship is a mapping relationship between DSCPs and slices established based on Quality of Service ,QoS, parameters; and
a route generation module, configured to add service routing to the target slice according to a service address in the data packet, so that the apparatus forwards the data packet in a network of the target slice according to the service routing.

8. A slice relation mapping apparatus, comprising:
a first mapping module, configured to establish a first mapping relationship between slices and Quality of Service ,QoS, parameters;
a second mapping module, configured to establish a second mapping relationship between DSCPs and QoS parameters; and
a third mapping module, configured to generate a mapping relationship between the DSCPs and the slices according to the first mapping relationship and the second mapping relationship.

9. An electronic device, comprising:
one or more processors;
a memory, storing one or more programs which, when executed by the one or more processors, cause the one or more processors to implement the data transmission method according to any one of claims 1 to 3 and/or implement the slice relationship mapping method according to any one of claims 4 to 6; and
one or more I/O interfaces connected between the processor and the memory, and configured to implement information exchange between the processor and the memory.

10. A computer-readable storage medium, storing a computer program which, when executed by a processor, implements the data transmission method according to any one of claims 1 to 3 and/or implements the slice relationship mapping method according to any one of claims 4 to 6.
